# EUROPEAN PATENT APPLICATION

(11) **EP 3 255 883 A1**
(43) Date of publication of application: **13.12.2017**
(21) Application number: 17174918.7
(22) Date of filing: 08.06.2017
(51) Int. Cl.: H04N 7/14

(54) **VIDEO CONFERENCE TIMELINE**

(30) Priority: 08.06.2016 NO 20160989
(71) Applicant: Pexip AS, 1366 Lysaker (NO)
(72) Inventor: SHAW, Eamonn, 1632 Gamle Fredrikstad (NO); CORMIER, Nicolas, 0653 Oslo (NO)
(74) Representative: Valea AB

(57) **Abstract**

Timeline (200) information is provided to endpoints in a video conferencing system. The timeline (200) comprises a starting time point (201), a current time point (203) and a plurality of timestamps (202) that represent respective points in time between the starting time point and the current time point. A plurality of events are detected that are associated with respective system generated activities or activities performed by participants located at the endpoints. Event information is provided, to at least one endpoint, for displaying along the timeline a respective graphical item (204) representing respective detected events. This provision of event information is performed repeatedly such that the graphical items slide along the timeline in a direction away from the current time point.

## Description

### Technical field

The present disclosure relates to providing a dynamic visualization of activity and context to participants in a video conference.

### Background

Transmission of moving pictures in real-time is employed in several applications like e.g. video conferencing, net meetings and video telephony. Video conferencing systems allow for simultaneous exchange of audio, video and data information among multiple conferencing sites. Control units such as Multipoint Control Units (MCUs) perform switching functions to allow endpoints of multiple sites to intercommunicate in a conference.

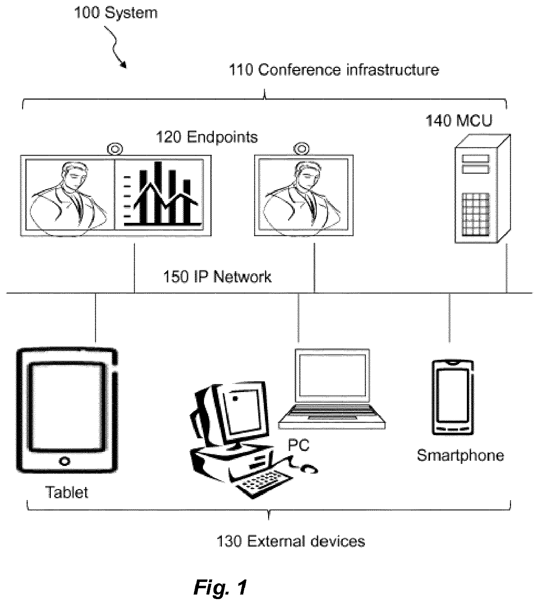

An endpoint may be defined as any suitable device or apparatus that is configured to provide visual and audio communication to one or more participants at a conference site. For example, as **figure 1** illustrates, a video conferencing system 100 that comprises endpoints 120 interconnected via an internet protocol (IP) network. A control unit 140 is in this example an MCU. As the skilled person will realize, the endpoints 120 may comprise a dedicated video communication terminal as well as suitably configured general purpose computers having video and audio communication hardware and software.

The control unit 140 links sites/endpoints/participants together by receiving frames of conference signals from the sites/endpoints, processing the received signals, and retransmitting the processed signals to appropriate sites/endpoints. The conference signals include audio, video, data and control information. In a switched conference, the video signal from one of the conference sites/endpoints, typically that of the loudest speaking participant, is broadcast to each of the sites/endpoints. In a continuous presence conference, video signals from two or more sites/endpoints are spatially mixed to form a composite video signal for viewing by conference participants at sites/endpoints. When the different video streams have been mixed together into one single video stream, the composed video stream is transmitted to the different sites/endpoints of the video conference, where each transmitted video stream preferably follows a set scheme indicating who will receive what video stream. In general, the different participants prefer to receive different video streams. The continuous presence or composite video stream is a combined picture that may include live video streams, still images, menus or other visual images from participants in the conference.

As exemplified in figure 1, in addition to traditional stationary video conferencing endpoints 120, external devices 130, such as mobile and computer devices, smartphones, tablets, personal devices and PCs, have recently entered the visual communication marketplace and are also used as video conferencing endpoints.

A participant may be located in front of a screen at a site/endpoint that is not large enough to show all participants in a video conference. This problem is exacerbated if one of the participants starts sharing a presentation. Sharing the screen between participants' faces and the presentation will render the presentation illegible. Showing only the presentation means that the participant can no longer see the presenter. Further, participants may enter and leave the conference during the call and a lot of other events may occur e.g. uploads of files, chats etc.

A drawback of such a scenario is that participants get confused and may lose track of what has happened during a video conference. Examples of questions that may remain unanswered in a large video conference may be: "Did Mr X leave?", "Can I see that slide you presented 10 minutes ago?", "Has Mrs Y commented on this lately?", etc.

Thus, there is a need for an intuitive and user-friendly solution providing historical and present information about events that has occurred and is occurring in a video conference.

### Summary

In view of the above, an object of the present disclosure is to overcome or at least mitigate drawbacks of prior art video conferencing systems.

This object is achieved, in a first aspect, by a method performed in a video conferencing system during an ongoing video conference comprising a plurality of endpoints. The method comprises providing timeline information, to at least one endpoint, for displaying a timeline, a starting time point, a current time point and a plurality of timestamps that represent respective points in time between the starting time point and the current time point. A plurality of events are detected that are associated with respective system generated activities or activities performed by participants located at the endpoints. Event information is provided, to at least one endpoint, for displaying along the timeline a respective graphical item representing respective detected events. This provision of event information is performed repeatedly such that the graphical items slide along the timeline in a direction away from the current time point.

In other words, such a method enables an improved visualization of a whole view or a partial view of events taking place in an ongoing video conference independently of the duration of the video conference.

In some embodiments, points in time along the timeline may be linearly distributed such that consecutive spatial distances between points in time are equal. In other embodiments, points in time along the timeline are non-linearly distributed such that consecutive spatial distances between points in time are decreasing or increasing in a direction away from the current time point.

Various further embodiments are described in more detail below.

In a second aspect there is provided a control unit for a video conferencing system. The control unit comprises input/output circuitry, a processor and a memory. The memory contains instructions executable by the processor whereby the control unit is operative, during an ongoing video conference comprising a plurality of endpoints, to:
- provide timeline information, to at least one endpoint, for displaying a timeline, a starting time point, a current time point and a plurality of timestamps that represent respective points in time between the starting time point and the current time point,
- detect a plurality of events associated with respective system generated activities or activities performed by participants located at the endpoints,
- provide event information, to at least one endpoint, for displaying along the timeline a respective graphical item representing respective detected events, said provision of event information being performed repeatedly such that the graphical items slide along the timeline in a direction away from the current time point.

In another aspect there is provided a computer program comprising instructions which, when executed on at least one processor in a control unit, cause the control unit to carry out the method according to the aspect summarized above.

In another aspect there is provided a carrier, comprising the computer program of the aspect summarized above, wherein the carrier is one of an electronic signal, an optical signal, a radio signal and a computer readable storage medium.

These further aspects provide the same effects and advantages as for the first aspect summarized above.

### Brief description of the drawings

Figure 1 schematically illustrates a video conferencing system,
figure 2 schematically illustrates a timeline,
figure 3 is a flowchart,
figure 4 schematically illustrates a control unit.

### Detailed description

According to embodiments herein, the abovementioned disadvantages of the present invention are eliminated or at least mitigated.

According to embodiments herein, a timeline representing an ongoing video conference is provided. In some embodiments, the timeline is a horizontal line or bar stretched out in time, representing an ongoing video conference. In this case, the rightmost edge of the line or bar or a current indication point on the right-hand part of the line or edge indicate the current point of time, and the leftmost edge of the line or bar or an indication point on the left-hand part of the line or edge indicate a starting point that, in some embodiments, may be the actual starting point in time of the ongoing video conference and in some embodiments a point in time when an event takes place. The time line may be both linear and non-linear. In between the starting point and current time point, different events are distributed and being represented by different graphical items. The position of the graphical items on the timeline indicates when between the starting point and the current time point of the video conference the event occurred. Each possible occurring event is represented by a respective graphical item. A graphical item associated with a certain event will appear on or at the current indication point when it occur, and will then slide towards along the timeline as time proceeds in a speed according to the dimension of the timeline. The start of the conference may also in the same way be seen as an event represented by the starting point appearing on or at the current indication point at the start of the conference and then sliding towards the left as the conference proceeds.

An advantage of embodiments described herein is that they enable a visualization of a whole view or a partial view of an ongoing video conference independently of the duration of the video conference. Some embodiments involve a non-linear timeline with smaller steps representing each point in time the farther away from the current point in time. For example, there may be a logarithmic relation between a time interval between consecutive points in time and a spatial distance between corresponding consecutive spatial distances along the timeline. The graphical items will then also apparently slide along the timeline slower as they pass away from the current indication point. Some embodiments involve a linear timeline having identical steps representing each time unit between the starting point and the current point in time.

In some embodiments, the leftmost edge of the line or bar or a current indication point at the left-hand part of the line or edge indicate the current point of time, and the rightmost edge of the line or bar or an indication point on the right-hand part of the line or edge indicate a starting point that, in some embodiments, may be the actual starting point in time of the ongoing video conference. The start of the conference may also in the same way be seen as an event represented by the starting point appearing on or at the current indication point at the start of the conference and then sliding towards the right as the conference proceeds.

In some embodiments, the timeline is a vertical line or bar stretched out in time representing an ongoing video conference. In this case, the uppermost edge of the line or bar or a current indication point on the upper part of the line or edge indicate the current point of time, and the lowermost edge of the line or bar or an indication point on the lower part of the line or edge indicate a starting point that, in some embodiments, may be the actual starting point in time of the ongoing video conference. The start of the conference may also in the same way be seen as an event represented by the starting point appearing on or at the current indication point at the start of the conference and then sliding downwards as the conference proceeds.

Oppositely, the lowermost edge of the line or bar or a current indication point on the lower part of the line or edge indicate the current point of time, and the uppermost edge of the line or bar or an indication point on the upper part of the line or edge indicate the starting point in time of the ongoing video conference. The start of the conference may also in the same way be seen as an event represented by the starting point appearing on or at the current indication point at the start of the conference and then sliding upwards as the conference proceeds.

Examples of events occurring in an ongoing are as follows:
A participant join the conference
A participant leave the conference
A participant uploads a file to the conference
A participant takes/leaves the floor in a conference
Chatting between participants
Placing of a time stamp
Starting/Ending a screen share
Starting/Ending a recording of the video conference

In the embodiments herein, the abovementioned marks and items representing the respective, possible events, may be both actionable and just informative. In case of an actionable graphical item, user input associated with a graphical item in the form of, e.g., a detection of a participant clicking on it will initiate an action associated with the respective event. For example, clicking on an graphical item representing an event where a participant upload have been uploading a file to the conference, will initiate a download or opening of the file, possibly with a user dialog in advance. Another example is clicking on a graphical item representing starting/ending a screen share will start to repeat the screen share event for the participant who clicked on the graphical item. Another example is starting a chat with a participant.

The informative graphical items may present the information in question on the timeline through a certain predefined graphical item design, or provide additional information by clicking on the graphical item or just by pointing the cursor on the graphical item or by so-called "mouse over".

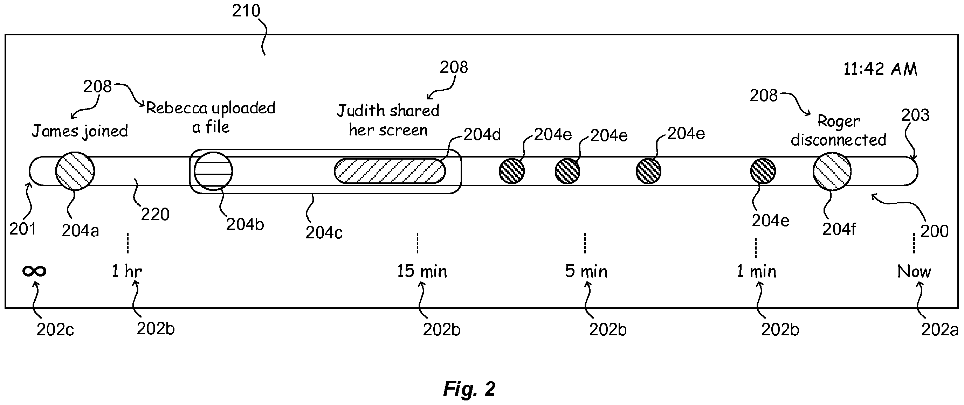

For illustrative purposes, an example scenario according to certain embodiments herein will be discussed referring to **figure 2.** Figure 2 illustrates a horizontal bar 210 with a slot 220 representing the timeline 200 of an ongoing video conference. In this case, time goes from right to left with the rightmost edge 203 of the slot 220 representing the current point of time as also indicated with a time stamp "Now" 202a. The dimension of the timeline 200 is non-linear with decreasing length intervals representing the points in time from right to left. It is to be noted that not all points in time are illustrated in figure 2, but only those at the time stamps 202. Needless to say, there are many points in time between each point in time indicated by a time stamp 202.

Graphical items representing conference events appear as they occur on the rightmost edge of the slot 220 and thereafter slides to the left towards a starting point 201 at the leftmost edge with a speed according to the dimension of the timeline 200. Consequently, the speed of the graphical items will be at highest when they leave the rightmost edge of the slot 220 and then decrease as they slide towards the left. Figure 2 is a snapshot of the view of the timeline 200 during a conference. In this snapshot, a number of graphical items are present. There is a join/leave graphical item 204a indicating when "James" joined the conference. Further, there is a file share graphical item 204b, 204c, a screen share graphical item 204d, chat graphical items 204e time stamp graphical items 202a-c and a connect/disconnect graphical item 204f. All the graphical items may have distinct design and/or additional text 208 information to provide unequivocal information about what they represent, and at the same time when they occurred relative to the current point of time 202a and the relation to other events. The different graphical items may be actionable or just informative depending on their characteristics. For example, use of actionable graphical items may involve when clicking on the graphical item representing a person leaving a conference (e.g. graphical item 204f in figure 2), there should be a way to re-connect with that person, in case the person was disconnected unintentionally. Also, when clicking on a graphical item representing a file or document comprising a slideshow, it should be possible to bring the particular slides up on the screen, in order to quickly review what was being presented earlier.

As mentioned above, the embodiments disclosed herein may be controlled by an MCU or another control point (including any of the external devices 130 in figure 1) controlling the video conference providing the information that enables displaying of the timeline for the different participants at the endpoints, possibly communicating with applications preinstalled on a user's terminal. The actual performance may be adjusted according to user settings.

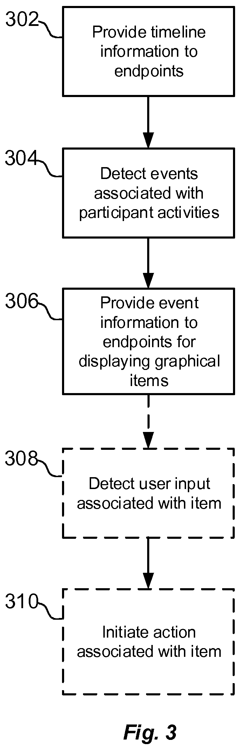

Turning now to **figure 3****,** embodiments of a method performed in a video conferencing system, e.g. by a control unit in the system 100 in figure 1, will be described in terms of a number of actions. It is to be noted that the method may be performed by any of the entities illustrated in the system 100 in figure 1, including an external device such as a wireless communication device having appropriate software functions. Continued reference is made to the above discussion and the video conferencing system 100 illustrated in figure 1 and the timeline 200 illustrated in in figure 2. With regard to how communication between the entities in the system 100 is realized, it may be done by way of, e.g., a mix between asynchronous pull hypertext transfer protocol (HTTP) requests and a real-time constantly open HTTP-like communication, the details of which is well known in the art.

### Action 302

Timeline information is in this action provided to at least one endpoint, the information is for displaying a timeline 200, a starting time point 201, a current time point 203 and a plurality of timestamps 202a-c that represent respective points in time between the starting time point 201 and the current time point 203.

In some embodiments, points in time along the timeline 200 are linearly distributed such that consecutive spatial distances between points in time are equal. In other embodiments, points in time along the timeline 200 are non-linearly distributed such that consecutive spatial distances between points in time are decreasing or increasing in a direction away from the current time point 203.

The starting point 201 may, in various embodiments, correspond to an actual starting point in time for the video conference. In various embodiments, the starting point 201 may correspond to a point in time when an event is detected and in various embodiments, the starting time point 201 may be one of the plurality of timestamps.

With regard to how the timeline 200 is to be displayed, embodiments include those where the starting time point 201 and the current time point 203 are respectively any of a leftmost edge and a rightmost edge of the timeline 200, a rightmost edge and a leftmost edge of the timeline 200, a lowermost edge and a uppermost edge of the timeline 200, and an uppermost edge and a lowermost edge of the timeline 200.

### Action 304

A detection is made of a plurality of events associated with respective system generated activities or activities performed by participants located at the endpoints 120, 130.

### Action 306

Event information is in this action provided to at least one endpoint 120, 130, for displaying along the timeline 200 a respective graphical item 204a-f representing respective detected events, said provision of event information being performed repeatedly such that the graphical items 204a-f slide along the timeline 200 in a direction away from the current time point 203.

In various embodiments, the method may include further actions as follows:

### Action 308

A detection is made of a user input associated with a graphical item 204a-f. As exemplified above, such user input may comprise detecting a so-called "mouse click", as is well known in the art.

### Action 310

In response to the detection of user input in action 308, an action may be initiated that is associated with an event associated with the graphical item 204a-f with which the user input is associated. As exemplified above, such actions may comprise downloading of a file, starting a screen-share and starting a chat.

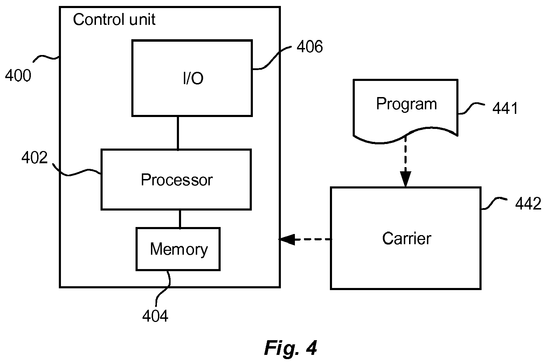

Turning now to **figure 4****,** and with continued reference to figure 1 and figure 2, a control unit 400 will be described in some more detail. The control unit 400 is for a video conferencing system, such as the system 100 described above. The control unit 400 comprises input/output circuitry 406, a processor 402 and a memory 404. The memory contains instructions executable by the processor 402 whereby the control unit 400 is operative, during an ongoing video conference comprising a plurality of endpoints 120, 130, to:
- provide timeline information, to at least one endpoint 120, 130, for displaying a timeline 200, a starting time point 201, a current time point 203 and a plurality of timestamps 202a-c that represent respective points in time between the starting time point 201 and the current time point 203.
- detect a plurality of events associated with respective system generated activities or activities performed by participants located at the endpoints 120, 130,
- provide event information, to at least one endpoint 120, 130, for displaying along the timeline 200 a respective graphical item 204a-f representing respective detected events, said provision of event information being performed repeatedly such that the graphical items slide along the timeline in a direction away from the current time point 203.

The instructions that are executable by the processor 402 may be software in the form of a computer program 441. The computer program 441 may be contained in or by a carrier 442, which may provide the computer program 441 to the memory 404 and processor 402. The carrier 442 may be in any suitable form including an electronic signal, an optical signal, a radio signal or a computer readable storage medium.

In some embodiments, the control unit 400 is operative such that points in time along the timeline 200 are linearly distributed such that consecutive spatial distances between points in time are equal.

In some embodiments, the control unit 400 is operative such that points in time along the timeline 200 are non-linearly distributed such that consecutive spatial distances between points in time are decreasing or increasing in a direction away from the current time point 203.

In some embodiments, the control unit 400 is operative such that the starting time point corresponds to an actual starting point in time for the video conference.

In some embodiments, the control unit 400 is operative such that the starting time point corresponds to a point in time when an event is detected.

In some embodiments, the control unit 400 is operative such that the starting time point is one of the plurality of timestamps.

In some embodiments, the control unit 400 is operative such that the starting time point and the current time point are respectively any of:
- a leftmost edge and a rightmost edge of the timeline,
- a rightmost edge and a leftmost edge of the timeline,
- a lowermost edge and a uppermost edge of the timeline, and
- a uppermost edge and a lowermost edge of the timeline.

In some embodiments, the control unit 400 is operative to detect a user input associated with a graphical item and initiate, in response to the detection of user input, an action that is associated with an event associated with the graphical item with which the user input is associated.

## Claims

1. A method performed in a video conferencing system (100) during an ongoing video conference comprising a plurality of endpoints (120, 130), the method comprising:
- providing (302) timeline information, to at least one endpoint, for displaying a timeline (200), a starting time point (201), a current time point (203), a plurality of timestamps (202a-c) that represent respective points in time between the starting time point and the current time point,
- detecting (304) a plurality of events associated with respective system generated activities or activities performed by participants located at the endpoints,
- providing (306) event information, to at least one endpoint, for displaying along the timeline a respective graphical item (204a-f) representing respective detected events, said provision of event information being performed repeatedly such that the graphical items slide along the timeline in a direction away from the current time point (203).

2. The method of claim 1, where points in time along the timeline are linearly distributed such that consecutive spatial distances between points in time are equal.

3. The method of claim 1, where points in time along the timeline are non-linearly distributed such that consecutive spatial distances between points in time are decreasing or increasing in a direction away from the current time point.

4. The method of any of claims 1 to 3, where the starting time point corresponds to an actual starting point in time for the video conference.

5. The method of any of claims 1 to 3, where the starting point corresponds to a point in time when an event is detected.

6. The method of any of claims 1 to 3, where the starting time point is one of the plurality of timestamps.

7. The method of any of claims 1 to 5, where the starting time point and the current time point are respectively any of:
- a leftmost edge and a rightmost edge of the timeline,
- a rightmost edge and a leftmost edge of the timeline,
- a lowermost edge and an uppermost edge of the timeline, and
- an uppermost edge and a lowermost edge of the timeline.

8. The method of any of claims 1 to 7, comprising:
- detecting (308) a user input associated with a graphical item, and
- initiating (310), in response to the detection of user input, an action that is associated with an event associated with the graphical item with which the user input is associated.

9. A control unit (400) for a video conferencing system (100), the control unit comprising input/output circuitry (406), a processor (402) and a memory (404), said memory containing instructions executable by said processor whereby the control unit is operative, during an ongoing video conference comprising a plurality of endpoints (120, 130), to:
- provide timeline information, to at least one endpoint, for displaying a timeline (200), a starting time point (201), a current time point (203) and a plurality of timestamps (202a-c) that represent respective points in time between the starting time point and the current time point,
- detect a plurality of events associated with respective system generated activities or activities performed by participants located at the endpoints,
- provide event information, to at least one endpoint, for displaying along the timeline a respective graphical item (204a-f) representing respective detected events, said provision of event information being performed repeatedly such that the graphical items slide along the timeline in a direction away from the current time point..

10. The control unit of claim 9, operative such that points in time along the timeline are linearly distributed such that consecutive spatial distances between points in time are equal.

11. The control unit of claim 9, operative such that points in time along the timeline are non-linearly distributed such that consecutive spatial distances between points in time are decreasing or increasing in a direction away from the current time point.

12. The control unit of any of claims 9 to 11, operative such that the starting time point corresponds to an actual starting point in time for the video conference.

13. The control unit of any of claims 9 to 11, operative such that the starting time point corresponds to a point in time when an event is detected.

14. The control unit of any of claims 9 to 11, operative such that the starting time point is one of the plurality of timestamps.

15. The control unit of any of claims 9 to 13, operative such that the starting time point and the current time point are respectively any of:
- a leftmost edge and a rightmost edge of the timeline,
- a rightmost edge and a leftmost edge of the timeline,
- a lowermost edge and a uppermost edge of the timeline, and
- a uppermost edge and a lowermost edge of the timeline.

16. The control unit of any of claims 9 to 15, operative to:
- detect a user input associated with a graphical item, and
- initiate, in response to the detection of user input, an action that is associated with an event associated with the graphical item with which the user input is associated.

17. A computer program (441) comprising instructions which, when executed on at least one processor (402) in a control unit (120, 400), cause the control unit to carry out the method according to any one of claims 1 to 8.

18. A carrier (442), comprising the computer program of claim 17, wherein the carrier is one of an electronic signal, an optical signal, a radio signal and a computer readable storage medium.
